# EUROPÄISCHE PATENTSCHRIFT

(11) **EP 2 653 579 B1**
(45) Veröffentlichungstag und Bekanntmachung des Hinweises auf die Patenterteilung: **15.10.2014**
(21) Anmeldenummer: 12164352.2
(22) Anmeldetag: 17.04.2012
(51) Int. Cl.: C22C 21/02, C22C 21/04

(54) **Aluminium-Legierung**
Aluminium alloy
Alliage d'aluminium

(43) Veröffentlichungstag der Anmeldung: 23.10.2013
(73) Patentinhaber: Georg Fischer Druckguss GmbH & Co. KG, 3130 Herzogenburg (AT); Georg Fischer GmbH & Co KG, 8934 Altenmarkt, St. Gallen (AT)
(72) Erfinder: Wiesner, Stuart, 8200 Schaffhausen (CH); Speckert, Leif, 8274 Gottlieben (CH)
(74) Vertreter: Fenner, Seraina

(56) Entgegenhaltungen:
- EP-A1- 1 978 120
- DE-A1-102009 012 073
- DE-U1- 29 522 065
- DE-U1-202006 006 518

## Beschreibung

Die vorliegende Erfindung betrifft eine Aluminium-Legierung für Bauteile mit erhöhter Festigkeit mit einer Dehngrenze Rp0,2 > 200 MPa und gleichzeitiger Bruchdehnung A > 6% nach einer Wärmebehandlung, oder einer Dehngrenze Rp0,2 > 120MPa und gleichzeitig hoher Bruchdehnung A > 9 % im Gusszustand oder einer Bruchdehnung > 10% nach einer T6-Wärmebehandlung, insbesondere für Struktur- und Fahrwerksteile eines Kraftwagens.

Bei im Druckgiessverfahren hergestellten Strukturbauteilen, insbesondere bei dünnwandigen Bauteilen, als auch bei einer Anwendung des Druckgiessverfahrens für Fahrwerksteile sind gute Fliess- und Formfülleigenschaften und die Erstarrungscharakteristik entscheidend. Dünnwandige Strukturbauteile sind insbesondere für die Automotive-Industrie interessant, da bei gleicher Bauteilfunktion durch einen geringeren Materialeinsatz ein Gewichtsvorteil erreicht wird, welcher wiederum zu einer Minderung der Betriebskosten und der Umweltbelastung führt.

Die Weiterentwicklung der Druckgiesstechnik erlaubt heute, komplizierte Bauteile mit hoher Festigkeit bei hoher Dehnung herzustellen. Fahrwerksteile werden vielerorts in anderen Giessverfahren wie beispielsweise dem Kokillenguss hergestellt. Dies beruht darauf, dass im Druckgiessverfahren die hierfür geforderten Festigkeiten nicht oder nicht bei genügender Dehnung erreicht werden können, um einen sicheren Betriebsfall zu gewährleisten.

Um die geforderten mechanischen Eigenschaften, speziell eine hohe Duktilität, zu erreichen, wird bei Struktur- und Fahrwerksteilen aus Druckgusslegierungen vom Typ AlSi10MnMg meist eine Wärmebehandlung, beispielsweise nach T6 (lösungsgeglüht, abgeschreckt und warmausgelagert) oder T7 (lösungsgeglüht, abgeschreckt und überaltert), durchgeführt. Es wird z.B auf DE 10 2009 012 073 A verwiesen. Hierdurch ändert sich das Gussgefüge eines beliebigen Bauteils, welches nun höheren Anforderungen bezüglich Festigkeit und Bruchdehnung genügt. Während eine Legierung dieses Typs im Gusszustand eine Dehngrenze Rp0,2 von etwa 110 MPa bei einer Bruchdehnung A von 4-5 % aufweist, kann durch eine T6-Wärmebehandlung eine Steigerung auf über 150 MPa bei mindestens 7 % Dehnung erreicht werden. Dies basiert auf der verfestigenden Wirkung der Ausscheidungshärtung, an welcher die Legierungselemente Mg und Si beteiligt sind. Durch eine Einformung des Si-Eutektikums wird ausserdem die Duktilität gesteigert. Eine solche Wärmebehandlung wird beispielsweise wie folgt durchgeführt: auf ein Lösungsglühen in einem Temperaturbereich von 450 bis 535 °C folgt ein Abschrecken in Wasser oder an der Luft auf Temperaturen unterhalb etwa 100 °C. Durch das Lösungsglühen werden die Legierungselemente durch Diffusionsvorgänge homogen fein verteilt und durch das Abschrecken im α-Al zwangsgebunden. Zudem wird das Si-Eutektikum sphäroidisiert. Die Legierung besitzt nun eine hohe Duktilität, aber nur geringe Festigkeit. Durch die anschließende Warmauslagerung bei 150-250 °C werden feine gleichmäßig verteilte Mg₂Si-Ausscheidungen gebildet, die wiederum die Materialfestigkeit erhöhen. Je nach Temperaturbild der T6-Wärmebehandlung lassen sich die mechanischen Eigenschaften auf entweder Festigkeiten oder Bruchdehnung optimieren, wodurch ein sehr breites Eigenschafts- und damit Produktfolio durch eine Legierung abgebildet werden kann. Um die Produktionskosten zu mindern kann auch eine T5-Wärmebehandlung genügen, das heisst eine Warmauslagerung bei 150 - 250 °C ohne vorhergehende Lösungsglühung. Auch hierbei wird der Festigkeitsanstieg durch Bildung von Mg2Si-Ausscheidungen hervorgerufen, allerdings in einem geringeren Maße, da die Abschreckwirkung eines aus dem Giesswerkzeug entnommenen Bauteils weniger stark ist und somit auch der Anteil zwangsgelösten Magnesiums im α-Al herabsinkt.

Ein Nachteil ist, dass gängigen Druckgusslegierungen des Typs AlSi10MnMg aufgrund der Legierungszusammensetzung ein Limit bezüglich des Aushärtungspotentials, und damit des Festigkeitsanstieges bei gleichbleibend hoher Dehnung, gesetzt ist.

Weitaus höhere Festigkeiten von bis zu 600 MPa für die Dehngrenze Rp0,2 werden aufgrund ihres höheren Aushärtungspotentials von AlZnMg- und AlMgCu-Knetlegierungen erreicht. Bei diesen Legierungstypen beruht die verfestigende Wirkung auf der Ausscheidungshärtung der Legierungselemente Mg, Cu und Zn (W. Hufnagel et al., "Aluminium-Taschenbuch 14. Auflage", Aluminium-Verlag Düsseldorf, 1988, S.46ff). Allerdings sind diese Legierungen aufgrund ihrer Anfälligkeit zu Warmrissen als auch ihrer Klebeneigung im Giesswerkzeug nicht druckgussgeeignet.

Als weitere Anforderungen eines im Druckgiessverfahren hergestellten Struktur- oder Fahrwerksteil sind neben den hohen Ansprüchen an Festigkeit und Dehnung auch Korrosionsbeständigkeit, Schweisseignung und Lebensdauer der Giesswerkzeuge zu nennen. Eine weitere Vorgabe besteht in der Maßhaltigkeit der Bauteile nach einer Wärmebehandlung, um einen problemfreien Zusammenbau der Karosserie gewährleisten zu können.

Aufwendige Lösungsglühbehandlungen haben neben wirtschaftlichen Mehrkosten der Wärmebehandlung selbst auch den Nachteil, dass Bauteile durch die schroffe Abschreckung zu Verzug neigen, welcher zu mechanischer Nacharbeit und erhöhtem Ausschuss führen kann.

Aufgabe der Erfindung ist es, eine Aluminium-Druckgusslegierung zu schaffen, welche durch eine erhöhte Festigkeit bei gleichzeitig hoher Dehnung ermöglicht, sowohl Struktur- als auch Fahrwerksteile im Druckgiessverfahren abzubilden. Dies beinhaltet bevorzugt Fahrwerksteile, welche aufgrund der hohen mechanischen Anforderungen (z.B. Dehngrenze Rp0,2 > 200 MPa und bei einer Bruchdehnung von > 6 %) und der Bauteilgeometrie eher in anderen Verfahren denn dem Druckgiessverfahren hergestellt werden. Zudem liegt der Erfindung die Aufgabe zugrunde, eine gute Giessbarkeit und Formfüllung zu gewährleisten. Weiterhin soll die Legierung möglichst viele Fügetechniken erlauben, von hoher Maßhaltigkeit sein und eine gute Korrosionsbeständigkeit aufweisen.

Die Aufgabe wird erfindungsgemäss dadurch gelöst, dass die Aluminium-Legierung aus 9 bis 11,5 Gew. % Silizium, 0,5 bis 0,8 Gew.% Mangan, 0,2 bis 1 Gew. % Magnesium, 0,1 bis 1,0 Gew.% Kupfer, 0,2 bis 1,5 Gew. % Zink, 0,05 bis 0,4 Gew.% Zirkon, 0,01 bis 0,4 Gew.% Cr, max. 0,2 Gew. %Eisen, max. 0,15 Gew.% Titan, 0,01 bis 0,02 Gew.% Strontium und als Rest Aluminium und herstellungsbedingte Verunreinigungen bis insgesamt max. 0,5 Gew. % besteht, wodurch die erhöhten Festigkeiten bei gleichzeitig hoher Dehnung gewährleistet sind, sei es im Gusszustand oder nach einer Wärmebehandlung, beispielsweise nach einer T5, T6, T7 oder anderen bekannten Wärmebehandlungen. Die Warmauslagerung kann auch innerhalb eines weiteren Prozessschrittes, beispielsweise einem Lackiervorgang, in das Bauteil eingebracht werden.

Das Erreichen der geforderten Qualität, u.a. hinsichtlich Festigkeit und Dehnung, lässt sich massiv durch die Wahl der Legierung beeinflussen. Die erfindungsgemäße Legierungszusammensetzung mit dem Ziel erhöhter Festigkeiten hat hier einen Zielkorridor für die Dehngrenze Rp0,2 > 200 MPa und einer Bruchdehnung A > 10 %.

Erfindungsgemäß besitzt die Legierung ein hohes Aushärtungspotential, welches durch eine Warmauslagerung bei Temperaturen zwischen 150 und 250 °C genutzt wird. Als Ergebnis der Entwicklung stellte sich heraus, dass durch die Beimengung geringer Mengen an Kupfer oder Zink eine signifikante festigkeitssteigernde Wirkung ohne Einbussen der Dehnung bei ausreichender Korrosionsbeständigkeit erreicht wird. Die gewünschte Wirkung wird durch eine Zugabe von 0,1 bis 1,0 Gew.-% Kupfer vorzugsweise 0,15 bis 0,5 Gew.-% Kupfer (und nochmals bevorzugt 0,3 bis 0,5 Gew.-% Kupfer) und 0,2 bis 1,5 Gew.-% Zink, vorzugsweise 0,4 bis 1,5 Gew.-% Zink, erzielt. Die Zugabe von Zink verbessert zudem das Giessverhalten und die Formfüllung.

Eine kombinierte Zugabe von Kupfer und Zink in günstigem Verhältnis innerhalb der oben genannten Anteile erlaubt eine nochmalige Steigerung der Festigkeit bei ausreichender Korrosionsbeständigkeit.

Der Legierungsanteil an Silizium beträgt 9 bis 11,5 Gew.-%. Das Zulegieren von Silizium mindert die Erstarrungsschwindung und dient somit einem guten Giessverhalten und guter Formfüllung.

Die Zugabe von 0,2 bis 1,0 Gew.-% Magnesium, vorzugsweise 0,2 bis 0,8 Gew.-% Magnesium, bewirkt eine festigkeitssteigernde Wirkung aufgrund der oben beschriebenen Ausscheidungshärtung. Zudem senkt eine Zugabe in günstigem Verhältnis zu Kupfer und Zink die Korrosionsanfälligkeit der erfindungsgemäßen Aluminium-Druckgusslegierung.

Eine Beimengung von Zirkonium bewirkt eine Steigerung der Dehnung ohne gleichzeitigen Abfall der Festigkeit, da hierdurch ein feineres eutektisches Gefüge vorliegt. Der Zirkoniumgehalt der erfindungsgemäßen Druckgusslegierung liegt bei 0,05 bis 0,4 Gew.-%.

Durch Zugabe von Strontium wird eine grobe und nadelförmige Ausbildung des AlSi-Eutektikums vermieden. Durch eine Beimengung von 0,01 bis 0,02 Gew.-% Strontium wird das Eutektikum dahingehend modifiziert, dass es sich in einer feinen und eher lamellaren Struktur ausbildet sowie zur Vermeidung einer Nicht- wie auch einer Überveredelung dient.

Eine Zugabe von Chrom bewirkt eine weitere Steigerung der mechanischen Eigenschaften, der Gehalt liegt hier bei 0,01 bis 0,4 Gew.-%, vorzugsweise bei 0,01 bis 0,3 Gew.-%.

Der kombinierte Gehalt von Mangan und Eisen beeinflusst wesentlich die Lebensdauer der Giesswerkzeuge und die Entformbarkeit. Die gewünschte Wirkung wird mit einer Zugabe von max. 0,2 Gew.-% Eisen und einem Mangangehalt von 0,5 bis 0,8 Gew.-% erreicht. Es ist von Vorteil, den Eisengehalt gering zu halten, um ein Versprödung des Materials durch die Bildung nadelförmiger AlFeSi-Phasen im Gefüge zu vermeiden. Durch gleichzeitige Zugabe von Mangan wird einem übermäßigen Angriff der eisenarmen Schmelze auf das Giesswerkzeug entgegengewirkt und durch eine Minderung der Klebeneigung die Entformbarkeit und damit die Maßhaltigkeit erhöht. Allerdings ist bei einer gleichzeitigen Zugabe von Eisen, Mangan und Chrom ein günstiges Verhältnis einzustellen, um die Bildung von Schwerkraftseigerungen zu vermeiden, da diese sowohl das Fliessvermögen als auch die Klebeneigung negativ beeinflussen.

Die Zugabe von Titan bewirkt eine Kornfeinung des α-Al durch das Bereitstellen von Nuclei während der Bildung der Aluminium-Dendriten. Der Titangehalt liegt bei max. 0,15 Gew.-%.

Weitere Vorteile und Merkmale der neuen Aluminium-Legierung zeigen sich in den nachfolgenden Ausführungsbeispielen, wobei sich die Erfindung nicht nur auf die Ausführungsbeispiele beschränkt.

Eine Mehrzahl an Probebauteilen in Form eines Druckguss-Bauteils und zweier Kugelformproben wurden in einem Druckgiessverfahren in zwei AluminiumLegierungen mit folgenden Legierungszusammensetzungen hergestellt:

| | Legierung 1 | Legierung 2 |
|---|---|---|
| Si [Gew.-%] | 10,8 | 11,4 |
| Fe [Gew.-%] | 0,15 | 0,16 |
| Mn [Gew.-%] | 0,56 | 0,57 |
| Cu [Gew.-%] | 0,3 | 0,38 |
| Zn [Gew.-%] | 0,56 | 0,25 |
| Mg [Gew.-%] | 0,49 | 0,58 |
| Ti [Gew.-%] | 0,13 | 0,08 |
| Cr [Gew.-%] | 0,01 | 0,05 |
| Sr [Gew.-%] | 0,017 | 0,017 |
| Zr [Gew.-%] | 0,1 | 0,07 |

Im Anschluss an das Druckgiessen wurde zwei verschiedene T6-Wärmebehandlungen durchgeführt und Zugproben aus dem Druckguss-Bauteil entnommen. Die ermittelten Kennwerte der mechanischen Eigenschaften nach diesen Wärmebehandlungen und im Gusszustand sind der nachfolgenden Tabelle zu entnehmen:

| | Rp0,2 [MPa] | Rm [MPa] | A [%] |
|---|---|---|---|
| Legierung 1 As cast | 138 | 300 | 9,2 |
| Legierung 1 T6 | 273 | 366 | 9,1 |
| Legierung 1 T6 modifiziert | 146 | 241 | 12,8 |
| Legierung 2 As cast | 142 | 300 | 9,0 |
| Legierung 2 T6 | 280 | 371 | 9,4 |
| Legierung 2 T6 modifiziert | 143 | 242 | 12,1 |

Aus der Tabelle geht hervor, dass Proben der Legierungen 1 und 2 nach einer Wärmebehandlung je nach Durchführung derselbigen eine Dehngrenze Rp0,2 > 270 MPa bei einer gleichzeitig hohen Bruchdehnung von A > 9 % oder eine Dehngrenze Rp0,2 > 140 MPa bei einer erhöhten Bruchdehnung > 12 % aufweisen. Hierdurch zeigt sich, dass die erfindungsgemässe Aluminium-Legierung je nach Wärmebehandlung insbesondere für die Herstellung von crash- und festigkeitsrelevanten Fahrwerks- und Strukturteilen eines Kraftwagens im Druckgiessverfahren geeignet ist. Bei der Herstellung von Fahrwerksbauteilen eines Kraftwagens im Druckgiessverfahren sollte eine Dehngrenze Rp0,2 von > 200 MPa bei gleichzeitiger Bruchdehnung von > 6 % erreicht werden. Die oben genannte Aluminium-Legierung ermöglicht die Abbildung solcher Fahrwerksteile im Druckgiessverfahren aufgrund der erfindungsgemässen Steigerung der Festigkeit bei gleichbleibend hoher Dehnung anstelle anderer Verfahren wie Kokillen- oder Sandguss, welche gängigerweise für solche Teile genutzt werden.

Wie aus der Tabelle ebenso hervorgeht, ist die erfindungsgemässe Aluminium-Legierung auch für die Herstellung von crash- und festigkeitsrelevanten Struktur- und Fahrwerksbauteilen eines Kraftwagens im Druckgiessverfahren geeignet, da hier eine Dehngrenze Rp0,2 von > 120 MPa bei gleichzeitiger Bruchdehnung von > 10 % erreicht werden soll, insbesondere um eine hohe Energieaufnahme und Verformbarkeit zu gewährleisten. Die Aluminium-Legierung erzielt die hier geforderten Festigkeitseigenschaften ebenso im Gusszustand bei einer Bruchdehnung von A > 9 %.

In weiteren Untersuchungen haben sich ausserdem die gute Korrosionsbeständigkeit und Schweißbarkeit solcher Legierungen gezeigt.

Die erfindungsgemässe Aluminium-Legierung eignet sich speziell zur Herstellung von festigkeits- und crashrelevanten Bauteilen eines Kraftwagens.

## Patentansprüche

1. Aluminium-Legierung für Bauteile mit erhöhter Festigkeit mit einer Dehngrenze Rp0,2 > 200 MPa und gleichzeitiger Bruchdehnung A > 6% nach einer Wärmebehandlung, oder einer Dehngrenze Rp0,2 > 120MPa und gleichzeitig hoher Bruchdehnung A > 9 % im Gusszustand oder einer Bruchdehnung > 10% nach einer T6-Wärmebehandlung, insbesondere für Struktur- und Fahrwerksteile eines Kraftwagens, enthaltend 9 bis 11,5 Gew. % Silizium, 0,5 bis 0,8 Gew.% Mangan, 0,2 bis 1,0 Gew. % Magnesium, 0,1 bis 1,0 Gew.% Kupfer, 0,2 bis 1,5 Gew. % Zink, 0,05 bis 0,4 Gew.% Zirkon, 0,01 bis 0,4 Gew.% Cr, max. 0,2 Gew. % Eisen, max. 0,15 Gew.% Titan, 0,01 bis 0,02 Gew.% Strontium und als Rest Aluminium und herstellungsbedingte Verunreinigungen von insgesamt max. 0,5 Gew. %.

2. Aluminium-Legierung nach Anspruch 1, **dadurch gekennzeichnet, dass** die Aluminium-Legierung 0,4 bis 1,5 Gew.-% Zink aufweist.

3. Aluminium-Legierung nach Anspruch 1, **dadurch gekennzeichnet, dass** die Aluminium-Legierung 0,15 bis 0,5 Gew.-% Kupfer aufweist.

4. Aluminium-Legierung nach Anspruch 1, **dadurch gekennzeichnet, dass** die Aluminium-Legierung 0,3 bis 0,5 Gew.-% Kupfer aufweist.

5. Aluminium-Legierung nach Anspruch 1, **dadurch gekennzeichnet, dass** die Aluminium-Legierung 0,2 bis 0,8 Gew.-% Magnesium aufweist.

6. Aluminium-Legierung nach Anspruch 1, **dadurch gekennzeichnet, dass** die Aluminium-Legierung 0,01 bis 0,3 Gew.-% Chrom aufweist.

7. Verwendung einer Aluminium-Legierung nach Anspruch 1 zum Druckgiessen von crash- und festigkeitsrelevanten Struktur- und Fahrwerksbauteilen eines Kraftwagens.

## Claims

1. Aluminium alloy for components having increased strength with a yield point Rp_{0.2} > 200 MPa and at the same time an elongation at break A > 6% after a heat treatment, or a yield point Rp_{0.2} > 120 MPa and at the same time a high elongation at break A > 9% in the cast state or an elongation at break > 10% after a T6 heat treatment, in particular for structural and chassis parts of a motor vehicle containing from 9 to 11.5% by weight of silicon, from 0.5 to 0.8% by weight of manganese, from 0.2 to 1.0% by weight of magnesium, from 0.1 to 1.0% by weight of copper, from 0.2 to 1.5% by weight of zinc, from 0.05 to 0.4% by weight of zirconium, from 0.01 to 0.4% by weight of Cr, not more than 0.2% by weight of iron, not more than 0.15% by weight of titanium, from 0.01 to 0.02% by weight of strontium and as balance aluminium and production-related impurities up to a total of not more than 0.5% by weight.

2. Aluminium alloy according to Claim 1, **characterized in that** the aluminium alloy comprises from 0.4 to 1.5% by weight of zinc.

3. Aluminium alloy according to Claim 1, **characterized in that** the aluminium alloy comprises from 0.15 to 0.5% by weight of copper.

4. Aluminium alloy according to Claim 1, **characterized in that** the aluminium alloy comprises from 0.3 to 0.5% by weight of copper.

5. Aluminium alloy according to Claim 1, **characterized in that** the aluminium alloy comprises from 0.2 to 0.8% by weight of magnesium.

6. Aluminium alloy according to Claim 1, **characterized in that** the aluminium alloy comprises from 0.01 to 0.3% by weight of chromium.

7. Use of an aluminium alloy according to Claim 1 for the pressure casting of crash- and strength-relevant structural and chassis components of a motor vehicle.

## Revendications

1. Alliage d'aluminium pour des composants à haute résistance, avec une limite d'élasticité Rp_{0,2} < 200 MPa en même temps qu'un allongement à la rupture A > 6 % après un traitement thermique, ou une limite d'élasticité Rp_{0,2} > 120 MPa en même temps qu'un allongement à la rupture élevé A > 9 % à l'état croulé ou un allongement à la rupture > 10 % après un traitement thermique T6, en particulier pour des pièces de structure ou de train roulant d'un véhicule automobile, contenant 9 à 11,5 % en poids de silicium, 0,5 à 0,8 % en poids de manganèse, 0,2 à 1,0 % en poids de magnésium, 0,1 à 1,0 % en poids de cuivre, 0,2 à 1,5 % en poids de zinc, 0,05 à 0,4 % en poids de zirconium, 0,01 à 0,4 % en poids de chrome, maximum 0,2 % en poids de fer, maximum 0,15 % en poids de titane, 0,01 à 0,02% en poids de strontium, et le reste étant de l'aluminium et des impuretés de fabrication inévitables avec un maximum de 0,5 % en poids au total.

2. Alliage d'aluminium selon la revendication 1, **caractérisé en ce que** l'alliage d'aluminium présente 0,4 à 1,5 % en poids de zinc.

3. Alliage d'aluminium selon la revendication 1, **caractérisé en ce que** l'alliage d'aluminium présente 0,15 à 0,5 % en poids de cuivre.

4. Alliage d'aluminium selon la revendication 1, **caractérisé en ce que** l'alliage d'aluminium présente 0,3 à 0,5 % en poids de cuivre.

5. Alliage d'aluminium selon la revendication 1, **caractérisé en ce que** l'alliage d'aluminium présente 0,2 à 0,8 % en poids de magnésium.

6. Alliage d'aluminium selon la revendication 1, **caractérisé en ce que** l'alliage d'aluminium présente 0,01 à 0,3 % en poids de chrome.

7. Utilisation d'un alliage d'aluminium selon la revendication 1 pour la coulée sous pression de composants de structure et de train roulant d'un véhicule automobile, importants en cas de collision et pour la résistance.
